# NEUE EUROPÄISCHE PATENTSCHRIFT

(11) **EP 0 775 437 B2**
(45) Veröffentlichungstag und Bekanntmachung des Hinweises auf die Entscheidung über den Einspruch: **23.03.2005**
(45) Hinweis auf die Patenterteilung: 30.05.2001
(21) Anmeldenummer: 96117805.0
(22) Anmeldetag: 07.11.1996
(51) Int. Cl.: A01D 45/02, A01D 69/06

(54) **Landwirtschaftliches Gerät zur Ernte von stengeligem Halmgut**
Agricultural device for harvesting stalk crops
Dispositif agricole pour la récolte des plantes à tige

(30) Priorität: 27.11.1995 DE 19544182
(43) Veröffentlichungstag der Anmeldung: 28.05.1997
(73) Patentinhaber: CLAAS Saulgau GmbH, 88340 Bad Saulgau (DE)
(72) Erfinder: Arnold, Rudolf, 88348 Saulgau (DE); Wicker, Anton, 88348 Saulgau-Bogenweiler (DE)
(74) Vertreter: Patentanwälte Eisele, Otten, Roth & Dobler

(56) Entgegenhaltungen:
- EP-A- 0 070 585
- EP-A- 0 099 527
- EP-A- 0 653 152
- DE-A- 3 324 102
- DE-U- 9 004 204
- FR-A- 2 294 625
- FR-A- 2 542 565
- FR-A- 2 559 995
- US-A- 3 589 110
- US-A- 3 808 783
- US-A- 5 099 635
- Prospekt "Die neue Maispflückgeneration - Twin System" von Capello, 05.11.1994
- Betriebsanleitung TS4 - TS5 - TS6, 945 PH - 946 PH - 948 PH, Capello, 12.01.1995
- Champion-Maehvorsatz, Ersatzteilliste 126, Kemper, M 6000

## Beschreibung

Die Erfindung betrifft ein landwirtschaftliches Gerät zur Ernte von stengeligem Halmgut nach dem Oberbegriff des Patentanspruchs 1. Während Erntemaschinen für Stengelpflanzen, wie Mais, traditionell für bestimmte Pflanzreihenabstände gebaut worden sind, liegt die Besonderheit der hier in Bezug genommenen Gattung darin, daß reihenunabhängig geerntet werden kann.

Ein derartiges Gerät ist in dem Farbprospekt "CHAMPION MÄHVORSATZ 4500" der Maschinenfabrik Kemper, 48703 Stadtlohn, DIN A4, 8 Seiten, beschrieben. Das auf Seite 6, oben, dargestellte Grundgestell zeigt die Anordnung der Getriebe und Antriebswellen für die einzelnen Mäh- und Förderrotoren. Das Grundgestell weist zwei parallele Querholme auf, wobei die Welle zur Querverteilung der Antriebskräfte in einem dieser Holme verläuft. Er besteht aus einzelnen Rohrstücken, die an den einzelnen Getriebeblocks angeflanschtsind. Diese Bauart hat jedoch mancherlei Nachteile. Die Getriebegehäuse und Flansche müssen die Biegekräfte des Querholms aufnehmen und entsprechend überdimensioniert sein. Die Montage gestaltet sich schwierig und der Austausch eines Getriebes zu Reparaturzwecken erfordert zwangsweise die Zerlegung des gesamten Geräts.

Auch die europäische Patentschrift 0 099 527 zeigt für die Montage und Wartung ungünstige Antriebsanordnungen einer gattungsgemäßen Maschine zum Mähen und Häckseln von stengelartigem Erntegut. Bei einer Ausführung werden die hochachs stehenden Rotoren durch oben liegende, in Rohren verlaufende Wellen angetrieben und bei einer weiteren Ausführung durch unten liegende Kettenantriebe, die in von Rotor zu Rotor verlaufenden Kettenwannen gekapselt sind. Immer sind also Gehäuseteile des Antriebs mitverantwortlich für die Tragfähigkeit der Grundkonstruktion. Der Austausch eines Rotors oder Einzelgetriebes gestaltet sich schwierig.

Der Erfindung liegt die Aufgabe zugrunde, die Montage und Demontage von Antriebsteilen zu vereinfachen.

Diese Aufgabe wird ausgehend von einem landwirtschaftlichen Gerät der einleitend bezeichneten Gattung erfindungsgemäß durch die kennzeichnenden Merkmale des Patentanspruchs 1 gelöst. Danach ist ein durchgehender einstückiger Querträger vorgesehen, an dem die einzelnen Getriebe angeschraubt sind. Die Verbindungswellen zwischen den Getrieben verlaufen außerhalb des Querträgers, wobei an der bezüglich der Fahrtrichtung F frontseitigen Fläche des Querträgers Winkelgetriebe angeschraubt sind, in deren Gehäuse eine aufrecht stehende Welle eines Mäh- und Förderrotors gelagert ist. Somit sind die Antriebsteile und deren Gehäuse funktionell vom tragenden Grundgerüst vollkommen getrennt, so daß sich die Montage und Demontage des Geräts erheblich vereinfacht. Einzelne Antriebsteile können ausgebaut werden, ohne die übrige Antriebsanordnung und die tragende Grundkonstruktion des Geräts anzutasten.

Vorzugsweise werden kleine einfach Getriebeeinheiten mit winkel-, T- oder kreuzförmiger Anordnung der Wellenanschlüsse verwendet, die bezüglich der Fahrtrichtung frontseitig oder rückseitig an dem Querträger angeschraubt sind. Insbesondere können die frontseitigen Winkelgetriebe zugleich die Tragkonstruktion, eines Mäh- und Förderrotors bilden, so daß der Rotor zusammen mit seinem Getriebe einfach nach vorne abgenommen werden kann.

Zweckmäßigerweise liegt jedem frontseitigen Winkelgetriebe ein rückseitiges Getriebe gegenüber, wobei die Verbindungswelle zwischen beiden Getrieben den Querträger in Fahrtrichtung durchsetzt. Die Montagefreundlichkeit wird weiter dadurch erhöht, daß die entlang des Querträgers angeordneten Getriebe durch Gelenkwellen miteinander antriebsverbunden sind.

Vorteilhafterweise kann die Reihe der rückseitig am Querträger angeschraubten Getriebe durch weitere Getriebe für den Antrieb seitlicher Zuführwalzen des landwirtschaftlichen Geräts fortgesetzt werden.

Ein Ausführungsbeispiel der Erfindung wird nachfolgend anhand der Zeichnung erläutert. Im einzelnen zeigt
- Fig. 1: eine schematische Draufsicht eines landwirtschaftlichen Geräts mit frontseitig an einem Fahrzeug angebauten Mäh- und Förderrotoren,
- Fig. 2: einen Querschnitt der Anordnung nach Fig. 1 und
- Fig. 3: in Fortsetzung der Fig. 1 eine Draufsicht der in Fahrtrichtung rechten Endpartie des Geräts nach Fig. 1 mit angedeuteter Zuführwalze.

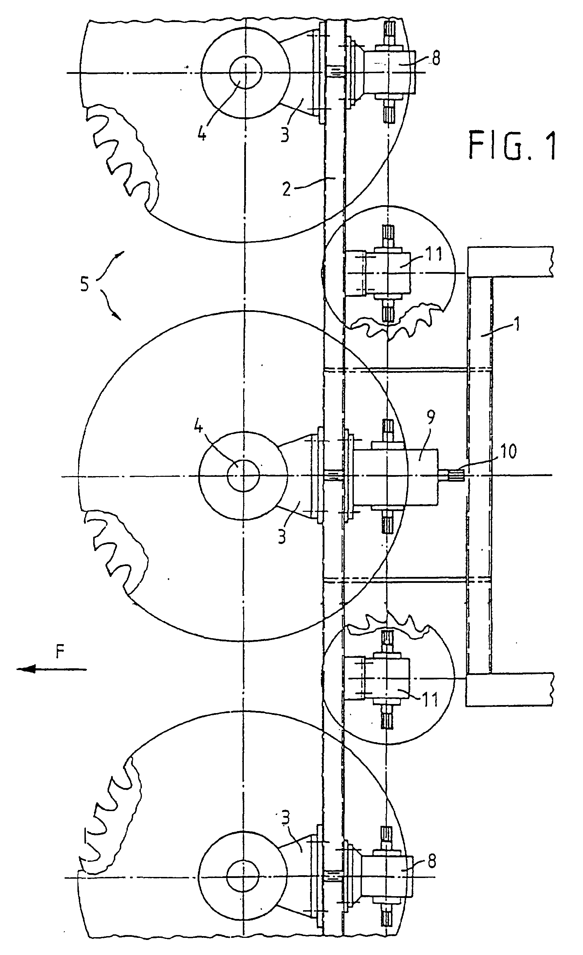

Das Erntegerät nach Fig. 1 kann sowohl als frontseitiges Anbaugerät für einen Schlepper als auch als Bestandteil einer selbstfahrenden landwirtschaftlichen Maschine konzipiert sein. Ein Anbaugerüst 1 (oder Fahrzeug) ist fest verbunden mit einem Querträger 2 in Form eines hochkant angeordneten Rechteckrohres. An der bezüglich der Fahrtrichtung F frontseitigen Fläche des Querträgers 2 sind Winkelgetriebe 3 angeschraubt, in deren Gehäuse eine aufrecht stehende Welle 4 eines Mäh- und Förderrotors 5 gelagert ist. Unten befindet sich eine Schneidscheibe 6 und darüber sind in Abständen zwei Förderscheiben 7 angeordnet. An der Rückseite des Querträgers sindjeweils unmittelbar den Winkelgetrieben 3 gegenüberliegend T-Getriebe 8 bzw. in der Mitte ein Kreuzgetriebe 9 angeschraubt. Diese sind, was aus der Zeichnung nicht ersichtlich ist, durch ineinander verzapfte Wellenstücke, welche den Querträger 2 durchsetzen, mit den Winkelgetrieben 3 antriebsverbunden. Auf diese Weise können durch Abschrauben der Winkelgetriebe 3 vom Querträger 2 die einzelnen Mäh- und Förderrotoren einzeln abgenommen werden, wobei die Wellenverbindungen mit den je weiligen rückseitigen Getrieben gelöst werden.

Zwischen den T-Getrieben 8 und dem Kreuzgetrieben 9, dessen rückseitiger Antriebszapfen mit dem Motor verbunden ist, sind weitere Getriebe 11 für nicht dargestellte Förderwalzen oder dgl. angeordnet. Diese Getriebe 11 können auch einfache Stehlager sein. Die Getriebe sind untereinander durch nicht dargestellte Gelenkwellen antriebsverbunden.

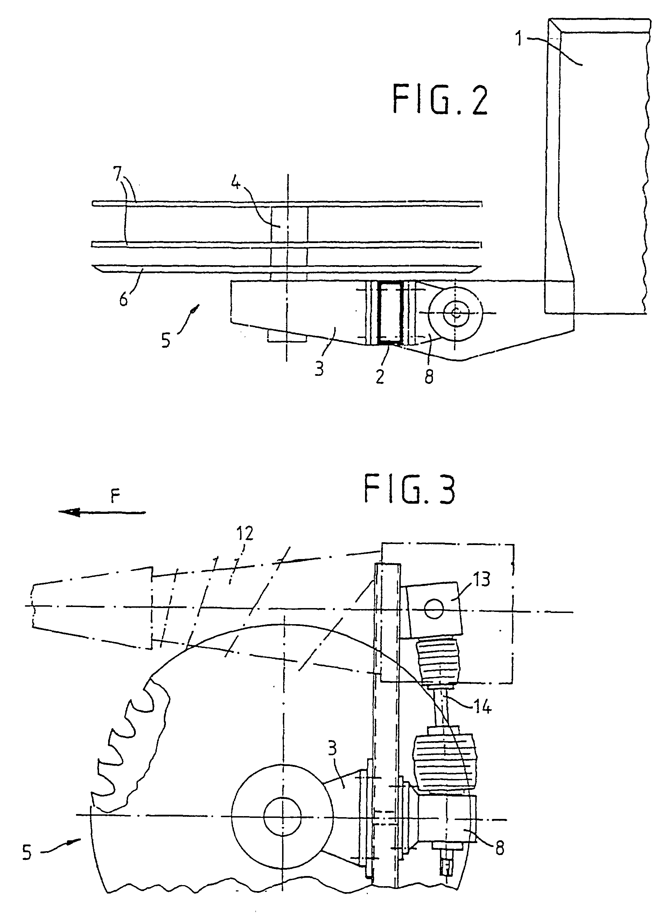

Fig. 3 zeigt am rechten äußeren Ende des in Fig. 1 bruchstückhaft dargestellten Geräts eine Teilerspitze mit Zuführwalze 12. Zu deren Antrieb ist am Ende des Querträgers 2 ein weiteres Getriebe 13 befestigt, das mit dem davor liegenden T-Getriebe 8 über eine Gelenkwelle 14 verbunden ist.

### Bezugszeichenliste:

- 1: Anbaugerüst
- 2: Querträger
- 3: Winkelgetriebe
- 4: Welle
- 5: Mäh- und Förderrotor
- 6: Schneidscheibe
- 7: Förderscheibe
- 8: T-Getriebe
- 9: Kreuzgetriebe
- 10: Antriebszapfen
- 11: Getriebe
- 12: Zuführwalze
- 13: Getriebe
- 14: Gelenkwelle

- F: Fahrtrichtung

## Patentansprüche

1. Landwirtschaftliches Gerät zur Ernte von stengeligem Halmgut mit einem über dem Boden geführten, sich quer zur Fahrtrichtung erstreckenden Querträger (2), an dessen Frontseite rotierende Mäh- und Förderelemente (5, 6, 7) vorgesehen sind, deren Achsen senkrecht oder schräg zum Boden stehen und die über Getriebe (3, 8, 9, 11, 13) angetrieben sind, **dadurch gekennzeichnet, dass** die Getriebe (3, 8, 9, 11, 13) vorn und hinten an dem Querträger (2) befestigt sind und die in Querrichtung verlaufenden Antriebsverbindungen (14) zwischen den Getrieben (3, 8, 9, 11, 13) außerhalb des Querträgers (2) liegen, wobei an einer bezüglich der Fahrtrichtung F frontseitigen Fläche des Querträgers (2) Winkelgetriebe (3) angeschraubt sind, in deren Gehäuse eine aufrecht stehende Welle (4) eines Mäh- und Förderrotors (5) gelagert ist.

2. Landwirtschaftliches Gerät nach Anspruch 1, **dadurch gekennzeichnet, dass** an der vorderseitigen Fläche des Querträgers (2) und an einer dazu parallelen rückseitigen Fläche angeschraubte Getriebe (3 bzw. 8, 9) mittels je einer den Querträger in Fahrtrichtung durchsetzenden Antriebswelle miteinander verbunden sind.

3. Landwirtschaftliches Gerät nach Anspruch 2, **dadurch gekennzeichnet, dass** die vorderseitig angeschraubten Winkelgetriebe (3) gleichzeitig Träger der Mäh- und Förderrotoren (5) und mit diesen zusammen abgenommen werden können.

4. Landwirtschaftliches Gerät nach Anspruch 3, **dadurch gekennzeichnet, dass** die rückseitig angeschraubten Getriebe winkelförmig (13), T-förmig (8) oder kreuzförmig (9) angeordnete Wellenanschlüsse aufweisen und entlang des Querträgers durch Gelenkwellen (14) miteinander antriebsverbunden sind.

5. Landwirtschaftliches Gerät nach einem der vorhergehenden Ansprüche, **dadurch gekennzeichnet, dass** an der Rückseite des Querträgers (2), insbesondere an dessen Enden, weitere Getriebe (13) für den Antrieb von Zuführwalzen (12) angebracht sind.

## Claims

1. An agricultural implement for harvesting stalk-type cereal, comprising a transverse bearer (2) which is guided above the ground and which extends transversely with respect to the direction of travel and at the front end of which are provided rotating cutting and conveyor elements (5, 6, 7) whose axes are perpendicular or inclined with respect to the ground and which are driven by way of transmissions (3, 8, 9, 11, 13), **characterised in that** the transmissions (3, 8, 9, 11, 13) are fixed to the transverse bearer (2) in front and behind same and the drive connections (14) extending in the transverse direction between the transmissions (3, 8, 9, 11, 13) are outside the transverse bearer (2), whereby angular transmissions (3) are screwed onto a front surface of the transverse bearer (2) relative to the direction of travel F, and in housings of said angular transmissions an upright shaft (4) of a cutting and conveyor rotor (5) is mounted.

2. An agricultural implement according to claim 1 **characterised in that** transmissions (3 and 8, 9 respectively) which are screwed to the front face of the transverse bearer (2) and to a rear face which is parallel thereto are connected together by means of a respective drive shaft which passes through the transverse bearer in the direction of travel.

3. An agricultural implement according to claim 2 **characterised in that** the transmissions (3) which are screwed to the transverse bearer at the front are angle transmissions and at the same time bearers for the cutting and conveyor rotors (5) and can be removed together with them.

4. An agricultural implement according to claim 3 **characterised in that** the transmissions which are screwed to the transverse bearer at the rear have shaft connections arranged in an angular shape (13), a T-shape (8) or a cross-shape (9) and are drivingly connected together along the transverse bearer by universal-joint shafts (14).

5. An agricultural implement according to one of the preceding claims **characterised in that** mounted to the rear side of the transverse bearer (2), in particular at the ends thereof, are further transmissions (13) for driving feed rollers (12).

## Revendications

1. Dispositif agricole pour la récolte de produit à tige, comportant un support transversal (2) qui est déplacé au-dessus du sol, qui s'étend transversalement à la direction de déplacement et sur la face frontale duquel sont disposés des éléments de coupe et de transport (5, 6, 7), dont les axes sont perpendiculaires ou inclinés par rapport au sol et qui sont entraînés par des transmissions intermédiaires (3, 8, 9, 11, 13), **caractérisé en ce que** les transmissions intermédiaires (3, 8, 9, 11, 13) sont fixées devant et derrière le support transversal (2) et **en ce que** les liaisons d'entraînement (14) transversales entres les transmissions intermédiaires (3, 8, 9, 11, 13) sont disposées à l'extérieur du support (2), des renvois d'angle (3) sont fixés par vis la surface, frontale dans la direction de déplacement F, du support 2, renvois dans le carter desquels est monté un arbre 4 disposé debout d'un rotor de coupe et transport 5.

2. Dispositif agricole selon la revendication 1, **caractérisé en ce que** des transmissions intermédiaires (3 ou 8, 9) fixées par vis à la surface avant du support transversal (2) et à une surface arrière du support parallèle à la première sont reliées les unes autres chacune par un arbre d'entraînement qui traverse le support transversal dans la direction de déplacement.

3. Dispositif agricole selon la revendication 2, **caractérisé en ce que** les transmissions intermédiaires (3) fixées par vis à la surface avant sont des renvois d'angle et peuvent servir simultanément de supports pour les rotors de coupe et les rotors de transport (5) et peuvent être démontées en même temps que ceux-ci.

4. Dispositif agricole selon la revendication 3, **caractérisé en ce que** les transmissions intermédiaires (13) fixées par vis à la surface arrière présentent des liaisons d'arbres en équerre (13), en T (8) ou en croix (9) et sont liées les unes aux autres sur le plan de l'entraînement par des arbres articulés (14) le long du support transversal.

5. Dispositif agricole selon une des revendications précédentes, **caractérisé en ce que** des transmissions intermédiaires (13) supplémentaires pour l'entraînement de cylindres d'amenée (12) sont montés sur la surface arrière, en particulier aux extrémités de celle-ci.
